# EUROPÄISCHE PATENTSCHRIFT

(11) **EP 0 275 461 B1**
(45) Veröffentlichungstag und Bekanntmachung des Hinweises auf die Patenterteilung: **16.03.1994**
(21) Anmeldenummer: 87118284.6
(22) Anmeldetag: 10.12.1987
(51) Int. Cl.: C08L 95/00, C04B 26/26, E01C 19/10, E01C 19/05

(54) **Verfahren zur Aufbereitung eines bituminösen einbaufähigen Kaltmischgutes auf Basis einer Bitumenemulsion und einem Mineralstoffgemisch abgestufter Körnung**
Process for the preparation of an incorporable bituminous cold-miscible material based on a bitumen emulsion, and a mixture of minerals with graded grain sizes
Procédé de préparation à froid d'un mélange bitumineux utilisable directement à base d'une émulsion bitumineuse et d'un mélange de matières minérales présentant une granulométrie discontinue

(30) Priorität: 15.12.1986 FR 8617618; 23.12.1986 FR 8618242; 09.03.1987 FR 8703286; 07.12.1987 FR 8717198
(43) Veröffentlichungstag der Anmeldung: 27.07.1988
(73) Patentinhaber: Muntzer, Emile Jacques, F-67000 Strasbourg (FR); Muntzer, Jean, F-59140 Dunkerque (FR)
(72) Erfinder: Muntzer, Emile, F-67000 Strasbourg (FR); Muntzer, Jean, F-59140 Dunkerque (FR); Muntzer, Dr. Paul, F-67000 Strasbourg (FR)
(74) Vertreter: Nuss, Laurent

(56) Entgegenhaltungen:
- CH-A- 511 053
- GB-A- 819 371

## Beschreibung

Die Erfindung betrifft ein Verfahren und eine Vorrichtung zur Herstellung eines einbaufähigen Kaltmischgutes auf Basis einer kationisch stabilisierten Bitumenemulsion mit einem Bitumenanteil von etwa 55 % und eines Mineralstoffgemisches abgestufter Körnung.

Bitumenemulsionen sind bekannt. Sie werden vorwiegend im Straßenbau eingesetzt. Ihre Vorteile liegen in der Möglichkeit der kalten Verarbeitung von flüssigem bis hartem Bitumen, in ihrer Anpassungsfähigkeit an die Natur der Mineralstoffe und damit in ihrem Benetzungsverhalten, in ihrer Geruchsfreiheit und Unbrennbarkeit.

Das Bitumen liegt in der wäßrigen Phase in der Regel kugelförmig fein verteilt vor, wobei die Teilchengröße im Mikrometerbereich liegt.
Bei der Verarbeitung der Emulsionen werden diese vor Ort gebrochen, das heißt sie werden zur Koaleszenz, zum Zusammenfließen, der Bitumenteilchen gebracht. Dieser Prozeß ist mit einer Umhüllung der Mineralstoffe mit dem Bitumen und dem Austritt des Wassers verbunden.

Man unterscheidet dabei je nach Brechzeit unstabile, halbstabile und stabile Bitumenemulsion.
Der Brechvorgang wird gewöhnlich durch physikalisch-chemische Reaktionen mit der elektrisch negativ geladenen Mineralstoffoberfläche und durch die Beseitigung der wäßrigen Phase, etwa durch Verdrängung und Verdunsten, herbeigeführt.
Hierbei spielt die Oberflächenladung der Mineralstoffe und der fein verteilten Bitumenteilchen eine wichtige Rolle.

Je nach Art der zur Stabilisierung der Emulsion verwendeten Emulgatoren kennt man kationisch und anionisch stabilisierte Bitumenemulsionen.

Als anionische Emulgatoren werden Alkalisalze von Fett- oder Harzsäuren, sogenannte Seifen, eingesetzt, die prinzipiell nach folgender Reaktion entstehen:

RCOOH + KOH = RCOO⁻ + H₂O

Fettsäure + Kalilauge = fettsaures Kali + Wasser Hierbei ist R ein mehr oder weniger langkettiger, hydrophober organischer Rest.

Das Emulgatormolekül befindet sich in der Grenzfläche zwischen Bitumenteilchen und Wasserphase, wobei sich der hydrophile, negativ geladene Fettsäurerest in der Wasserphase und der hydrophobe Rest im Bitumen orientiert. Das Bitumenteilchen hat eine negative Ladung.

Als kationische Emulgatoren eignen sich hochmolekulare Fettamine, die nach folgender Reaktion entstehen:

RNH₂ + HCl = RNH₃⁺ + Cl⁻

Fettamin + Salzsäure = Ammoniumsalz Auch hier ist R ein hydrophober organischer Rest.

Bei Anordnung dieses Moleküls in der Grenzfläche erhält das Bitumenteilchen eine positive elektrische Ladung.
Kationische Bitumenemulsionen weisen pH-Werte unter 7 auf, während anionische Emulsionen pH-Werte über 7 besitzen.

Die Oberflächenladungsverhältnisse erklären das unterschiedliche Brechverhalten der beiden Emulsionsarten.
Die negativ geladenen Bitumenteilchen der anionischen Emulsion kontaktieren und benetzen die negativ geladene Mineralstoffoberfläche aufgrund der gleichnamigen elektrischen Ladung widerwilliger, d.h. erst nach Beseitigung bzw. nach Verdrängung der wäßrigen Phase setzt der Brechvorgang ein. Die unterschiedlichen Ladungsverhältnisse bei den kationisch stabilisierten Bitumenemulsionen zwischen Bitumenteilchen und Mineralstoffoberfläche führen im Gegensatz dazu zu einem schnellen Kontaktieren der Bitumenteilchen mit den Mineralstoffen und damit zum schnellen Brechen der Emulsion unter Verdrängung des Emulsionswassers.

Grund für die Entwicklung kationisch stabilisierter Bitumenemulsionen war das häufig nicht befriedigende Verhalten der anionischen Emulsionen bei stark silikatischen Gesteinssorten. Hierbei führte die Annahme, daß derartige Gesteine an ihrer Oberfläche eine negative Ladung aufweisen und daher im Kontakt mit anionischer Bitumenemulsion deren gleichgeladene negative Bitumenteilchen abstoßen, naheliegenderweise in diese Entwicklungsrichtung. Nur die positiv geladenen Bitumenteilchen werden von der negativ geladenen Oberfläche des silikatischen Gesteins angezogen. Allerdings haben die kationisch stabilisierten Bitumenemulsionen den Nachteil, daß es aufgrund des niedrigen pH-Wertes zu unerwünschten Reaktionen zwischen der wäßrigen Phase der Emulsion und den Füllstoffen kommen kann. Weiter kann ein zu niedriger pH-Wert auch zu Korrosionserscheinungen an den eingesetzten Arbeitsinstrumenten und Behältern führen.

In der schweizerischen Patentschrift CH-A-511 053 wird der Einsatz von hydrolysierten Proteinverbindungen beschrieben. Bekanntlicherweise weisen hydrolysierte Proteinverbindungen, die Bruchstücke der viel größeren, nicht hydrolysierten Proteine darstellen, eine gewisse Grenzflächenaktivität auf. Sie können sich in der Grenzfläche anlagern, und entsprechend ihrer hydrophilen und hydrophoben Moleküleigenschaften ist eine Orientierung des Moleküls möglich, was bekanntlich zu einer Stabilisierung von ölartigen Tröpfchen (Bitumen) in Wasser führt. Es zeigt sich jedoch, daß die hydrolysierten Proteinverbindungen der CH-A-511 053 im Prinzip zu Bitumenemulsionen mit "klassischem" Verhalten führen. Unter pH 7 weisen sie Eigenschaften einer kationischen Bitumenemulsion auf und über pH 7 die einer anionischen Bitumenemulsion.

Das hängt mit den amphoteren Eigenschaften des Moleküls zusamen, das sowohl NH₂-Gruppierungen als auch COOH-Gruppierungen und Peptid-Bindungen aufweist. Kationische Bitumenemulsionen mit pH-Werten in neutralen bis schwach alkalischen Bereichen lassen sich mit hydrolysierten Proteinverbindungen nicht herstellen.
Hinzu kommt, daß die Hydrolyse von Proteinen ein relativ aufwendiger und kostenintensiver Prozeß ist.

Diese Vorgeschichte berücksichtigend kann jedoch festgehalten werden, daß die Technik der Kaltmischgutherstellung auf Bitumenemulsionsbasis und zwar unter Verwendung der selben Bitumensorten wie sie in der Heißmischguttechnik zu einem Teil zur Anwendung kommen, bis heute in ihren Ergebnissen nicht das Niveau der Heißmischgutaufbereitung erreicht hat.

Es gibt keine Emulsion, die zu einer zufriedenstellenden Massenproduktion von Kaltmischgut führt, bei der das Produkt gut verarbeitbar und in dicken Schichten verlegbar ist und dessen weitere Qualität und Eigenschften vergleichbar mit den bei der Heißmischgutaufbereitung erzielten Ergebnissen sind.

Nachteilig ist insbesondere der erhebliche Transportaufwand für die Emulsion selbst, das heißt für das Emulsionswasser, das bei dem Einsatz fertiger Emulsionen für die Kaltaufbereitung des bituminösen Mischgutes in einer Mischanlage vor Ort, das heißt in der Nähe der Baustelle, verbracht werden muß.

Dies berücksichtigend ist es Aufgabe dieser Erfindung, ein Verfahren nach der eingangs beschriebenen Art zu nennen, das die Heranführung der Emulsionsherstellung an die Anlage zur Herstellung bituminösen Mischgutes soweit wie möglich zuläßt, wobei die Emulsion selbst so zu bestimmen ist, daß sie den heutigen Anforderungen des modernen Straßenbaus entspricht, das heißt also, daß sie rückblickend auf die erwähnten Nachteile eine zufriedenstellende Massenproduktion von Mischgut in Form einer kationischen Emulsion erlaubt, die auch bei neutralen bis schwach alkalischen pH-Werten stabiles Verhalten zeigt.

Die erfindungsgemäße Lösung dieser Aufgabe sieht vor, ein Verfahren zur Herstellung eines einbaufähigen Kaltmischgutes auf Basis einer kationisch stabilisierten Bitumenemulsion mit einem Bitumenanteil von etwa 55 % und eines Mineralstoffgemisches abgestufter Körnung anzubieten, das dadurch gekennzeichnet ist, daß zunächst in einer ersten Kolloidmühle auf bekannte Weise aus alkalisiertem Wasser und bereits angesäuertem Heißbitumen für den Straßenbau eine anionisch stabilisierte Bitumenemulsion hergestellt wird. Die so hergestellte anionisch stabilisierte Bitumenemulsion wird anschließend einem Wärmeaustauscher zugeführt und dort abgekühlt. Im Wärmeaustauscher wird der anionisch stabilisierten Bitumenemulsion nach Abkühlung auf unter 50 °C 0,5 - 3 % quellfähige oder wasserlösliche pflanzliche Proteinstoffe zugesetzt, wobei das als Kühlmittel verwendete erwärmte Wasser alkalisiert und wieder der ersten Kolloidmühle zugeführt wird.

Die nun entstandene Bitumenemulsion wird anschließend durch eine zweite Kolloidmühle geführt. Nach Zugabe der Proteinstoffe und spätestens vor Austritt aus der zweiten Kolloidmühle werden der Bitumenemulsion zusätzlich neutrale Stoffe, wie Calciumchlorid oder Magnesiumsulfat, saure Stoffe, wie Aluminiumsulfat, Eisensulfat oder dreiwertige Chromsalze, sterilisierend wirkende Stoffe, wie Formaldehyd, bitumenmodifizierende Stoffe, wie bitumenmodifizierende Latexe oder Faserstoffe und/oder haftungsfördernde und brechungsverzögernde oder brechungsbeschleunigende Stoffe wie Zemente oder Kalke zugesetzt.
Die anionisch stabilisierte Bitumenemulsion kann nach dem Verlassen der ersten Kolloidmühle ohne Zwischenaufenthalt in den Wärmeaustauscher überführt werden, kann aber auch zwischengelagert werden und anschließend in den Wärmeaustauscher überführt werden.

Erfindungsgemäß werden als quellfähige oder wasserlösliche Proteinstoffe Stoffe eingesetzt, die in Mehlen pflanzlicher Preßkuchen enthalten sind.

Die erfindungsgemäße Vorrichtung zur Durchführung des Verfahrens ist in dem kenzeichnenden Teil des Anspruches 5 beschrieben.

Die Herstellung der erfindungsgemäßen Bitumenemulsion kann in einer mit der Mischanlage integrierten Einheit, ausgehend von einem angesäuerten Straßenbaubitumen, erfolgen.

Die durch die Penetration des Bitumens erforderliche Temperatur ist dabei identisch mit der Zugabe Temperatur des Bitumens bei Aufgabe in den Mischtrog (vgl. Shell-Tabelle, Seite 16 "Straßenbau mit Shellbitumen", Auflage 1966) und liegt, bei einer Penetration von 200, in einem Bereich zwischen 160 und 170 °C.

Die Emulgierung des Bitumens mit einem etwa 45%igen Wasseranteil erfolgt bei einer Temperatur des Wassers, wie sie sich aus der Faustformel der Praxis ergibt, d.h. die Temperatur des Bitumens plus der Temperatur des Wassers muß geringer als 220 °C sein. Für eine Bitumentemperatur von 170 °C liegt die Wassertemperatur unter 50 °C, wobei die Emulsionsherstellung bis zu Wassertemperaturen von 30 °C noch möglich ist.

Die Emulsion wird in einem Wärmeaustauscher gekühlt und das aus der Kühlung resultierende erwärmte Wasser wieder kontinuierlich in die Emulsionsaufbereitung zurückgeführt.
Dieser Vorteil muß als gravierend bezeichnet werden, da die Erwärmung des Wassers ohne zusätzlichen Energieaufwand durch die notwendige Kühlung des Bitumens erfolgt.
Man kann sie praktisch als "autark" ansprechen. Die Zuführung der stabilisierend wirkenden Proteinstoffe in die anionische Emulsion erfolgt ebenfalls kontinuierlich im weiteren, d.h. teilweisen Durchlauf über die Kühlstrecke des Wärmeaustauschers, wobei die zumindest theoretische Möglichkeit - bei ausreichender Kühlung -, diese bereits eingangsseitig in den Wärmeaustauscher zuzusetzen, im allgemeinen nicht wahrgenommen werden kann, da die Temperatur für die Proteinstoffe noch zu hoch liegt.
Die Emulsion nimmt in Weiterführung durch den Wärmeaustauscher die erwünschten kationischen Eigenschaften an.
Die Zugabe der erforderlichen neutralen oder sauren oder sterilisierend wirkenden oder haftungsfördernden Stoffe oder Bitumen modifizierende Latexe erfolgt in einer zweiten Kolloidmühle, wobei diese den Charakter der Emulsion bestimmt.
Des weiteren bestimmt die Zugabe der brechungsverzögernden oder brechungsbeschleunigenden Stoffe im wesentlichen das Einbauverhalten.

Insgesamt kann festgestellt werden, daß durch diese erste Merkmalsverbindung und ihre zusätzliche Erläuterung bereits alle erforderlichen Schritte des Verfahrensablaufes verdeutlicht wurden, um ein Mischgut im Sinne der Aufgabenstellung herzustellen.

Eine Weiterbildung des Verfahren befaßt sich mit der Verbesserung der Hafteigenschaften der Emulsion auf den Mineralstoffen.

Es ist vorgesehen, daß zur Förderung der Haftung des Bitumens aus der Emulsion auf den Mineralstoffen eine begrenzte Menge dreiwertiger Chromsalze in die Emulsion eingegeben wird, die jedoch nicht zur Ansäuerung und zur Verdickung der Emulsion führen kann, also ohne den kationaktiven Zustand der Proteine im alkalischen Medium zu stören, mit dem Ergebnis, daß trotz des Ausfällens der dreiwertigen Chromsalze in Form des wasserlöslichen Chromhydroxydes Cr₂(OH)₆, nach der Ionengleichung 2Cr⁺⁺⁺ + 6 OH⁻ = Cr₂(OH)₆, derselbe Haftfestigkeitsanstieg zu verzeichnen ist, wie dies mit den wasserlöslichen dreiwertigen Chromsalzen, welche im sauren Medium unter Verdickung der Emulsion gelöst bleiben, der Fall ist.

Die hervorragenden Haftungseigenschaften, die dreiwertiges Chromsalz vermittelt, sind bekannt. Sie werden im sauren Medium aktiv.

Die durch die Umwelttechnik geltend gemachten Bedenken gegen Chromsalze richten sich hauptsächlich gegen das sechswertige Chromion, welches über eine kleine Toleranzgrenze hinaus giftig wirkt, kaum aber gegen das in diesem Falle vorliegende dreiwertige Chromsalz, welches eine breite Anwendung in der Ledergerbung, z.B. Schuhober- und Sohlenleder, Verwendung findet.
Diese Bedenken können hier deshalb vollständig unbeachtet bleiben, weil das Chromhydroxyd, so wie es in der alkalisch reagierenden Emulsion vorliegt, wasserunlöslich ist und trotzdem - in Zusammenwirkung mit den Proteinstoffen - die Haftungseigenschaften in gleicher Weise erhalten bleiben.

Unabhängig von dieser Aussage wird im Hinblick auf die erste Merkmalsverbindung darauf hingewiesen, daß die Zufügung von dreiwertigem Chromsalz auf eine Menge beschränkt bleibt, welche keine Ansäuerung der Emulsion (pH > als 7) zur Folge hat, so daß eine thixotrope Emulsionsverdickung und - bei Verbleib im alkalischen Medium - eine maximale Bitumenkonzentration der Emulsion ermöglicht wird.

Die Ansäuerung der Emulsion, welche im alkalischen Medium ein zu plastisch anfallendes Mischgut erzeugt, kann insofern als Hilfsmittel dienen, das zu plastische Mischgut in einen korngetrennten Zustand zu überführen.

Um zu vermeiden, daß durch die Ansäuerung der Emulsion vor ihrer Zugabe zu den Mineralkörnungen im Mischer ein Stocken ihres Durchflusses in den Leitungen eintritt, wird die Zugabe des Ansäuerungsstoffes in den Mischer verlegt, in der Weise, daß er auf die auf den Bändern anlaufenden Mineralkörnungen gegeben wird.
Die thixotrope Verdickung wird vom Mischer ohne Schwierigkeiten überwunden, so daß aus dem zu plastischen Mischgut ein korngetrenntes entsteht.

Zur Frage der Verbesserung der Haftfestigkeit wird vermerkt, daß die Haftfestigkeit gesteigert wird, wenn einer leicht chromaktivierten Verfahrensemulsion ergänzend dreiwertige wassergelöste Chromsalze zugesetzt werden, und zwar zeitgleich mit einer Alkalimenge, welche gerade ausreicht, diese zugefügte Chromsalzmenge als Chromhydroxyd Cr₂(OH)₆ niederzuschlagen, so daß die Emulsion im alkalischen Medium verbleibt.

Zur Frage der Ansäuerung der Mineralstoffe wird vermerkt, daß - im Hinblick auf den Erhalt von korngetrenntem Mischgut, wenn dies im alkalischen Medium zu plastisch anfällt - mit der Ansäuerung der alkalischen Emulsion erreicht wird, diese Ansäuerung nicht während der Emulgiervorgänge zu vollziehen, sondern im Mischer, wo der Ansäuerungsstoff mit den auf dem Transportband aufliegenden Mineralstoffen ankommt und hier die den korngetrennten Zustand hervorrufende Emulsionsverdickung stattfindet.

Da es sich um einen kontinuierlichen Mischprozeß handelt, wird vorgeschlagen, daß die ununterbrochene Zuführung des Bindemittels und des Mineralstoffgemisches - wie dies in einer kontinuierlich arbeitenden Heißmischgutanlage stattfindet - in zumindest zwei, in Reihe hintereinander angeordneten Mischern erfolgt, wobei der in Beschickungsstellung sich befindende Micher bei Erreichung seines maximalen Füllstandes, bei Verwendung der Füllstandsanzeige als Regelgröße, Impuls für die Umschaltung der Steuerorgane für die Zuführung des Mineralstoffgemisches und des Bindemittels zur Beschickung eines entleerten Folgemischers oder Signal für eine manuelle Umstellung gibt.

Selbstverständlich können auch auch weitere Mischer vorgesehen werden, so daß eine entsprechend verlängerte Mischzeit in den einzelnen Stationen möglich ist.
Dadurch werden weitere Möglichkeiten für die bituminöse Aufbereitung mit stabilen Emulsionen erschlossen, so daß auch an die Aufbereitung von Mischgut zur Herstellung von Alu-Schmelzelektroden oder Söderberg-Massen zumindest gedacht werden kann. Ähnliches gilt für die Steinkohlenbrikettierung.

Es ist weiter vorgesehen, daß der Mischprozeß entweder in stationär angeordneten Mischern oder aber in Fahrmischern im Sinne der üblichen Betonfreifallmischer durchgeführt wird.

Die Fahrmischer eignen sich insbesondere bei gegebener Notwendigkeit, lange Mischzeiten zu erzielen oder Stauungen in der Mischgutzugabe zu vermeiden.
Sie können für schnellbrechende Emulsionen dort eingesetzt werden, wo ein längerer Antransport des Mischgutes erfolgt, indem die im getrennt mitgeführten Behälter enthaltene Emulsionsdosis an der Baustelle den im Mischer drehenden Mineralkörnungen zugegeben wird (Schlämme u.s.w.).

Zur Auswahl der vorwiegend pflanzlichen Proteinstoffe wurde gefunden, daß die Emulsionsart - kationisch stabil im alkalischen Medium - durch die spezifischen Eigenschaften der zur Anwendung kommenden Komponenten der Proteinstoffe, wie sie aus den Mehlen der pflanzlichen Preßkuchen und deren Zusamensetzung - bis zu 50 % und mehr -, hauptsächlich aus Aminosäuren der Folge Lysin, Methionin, Methionin + Cystin, Trytophan, Threoin, Glycein, Zerin, Leucin, Isoleucin, Valin, Histidin, Arginin, Phenylalanin und andere etwa anwesende Aminostoffe, gewonnen werden, bestimmt wird.

Es ist ein großer Vorteil der Erfindung, daß auf diese Weise durch die Einführung von quellfähigen und waserlöslichen Proteinstoffen in Form von Proteinmehlen, Stabilität, Kationaktivität und Haftfestigkeit im sauren und alkalischen Medium erreicht werden kann.
Die Proteine lassen sich also in breitem Rahmen der Mischaufgabe anpassen.

Es wurde festgestellt, daß noch bevor eine eventuelle Ansäuerung der mit Proteinstoffen versetzten Emulsion erfolgt, diese bereits ausgeprägte kationische Eigenschaften besitzt, und zwar entgegen der üblichen Lehre, daß diese nur im sauren Medium wirksam und beständig sein könne.

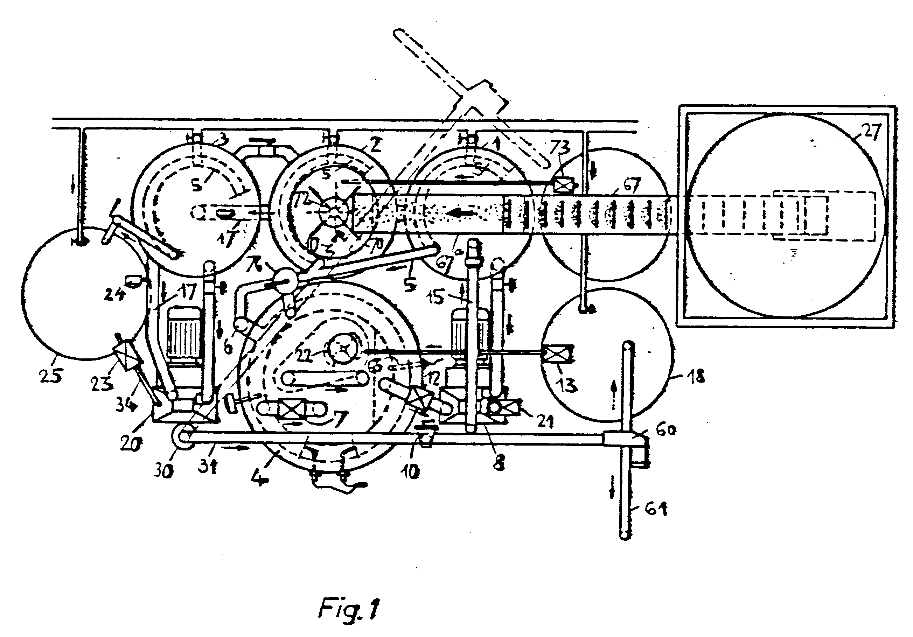

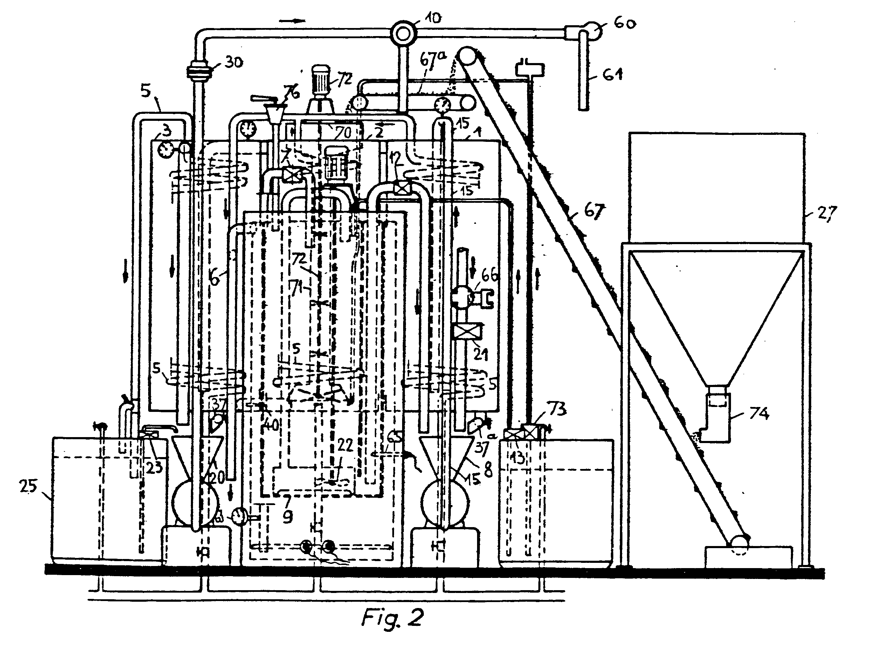

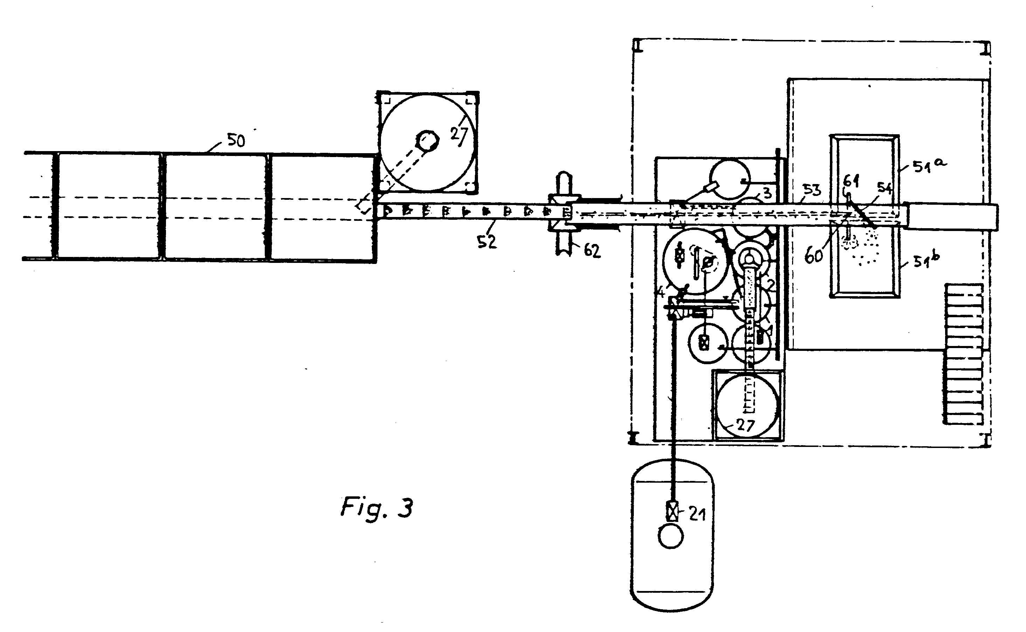

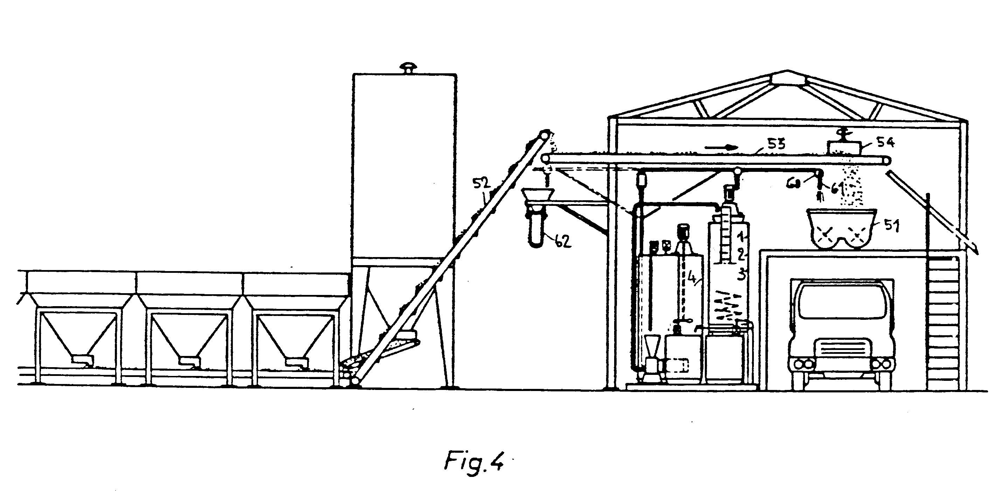

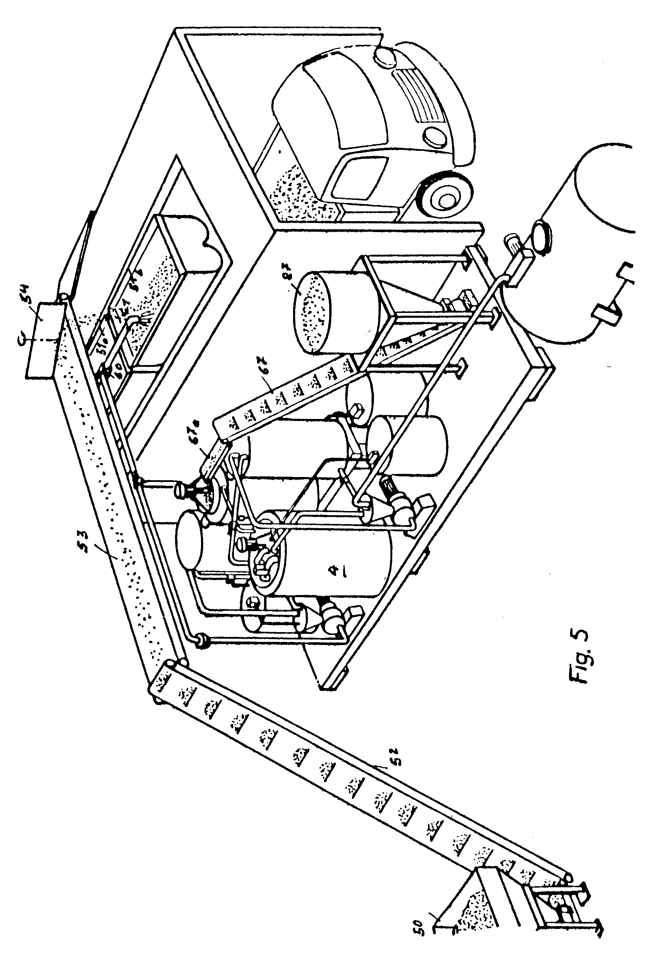

Dies hat sich im Um- und Neubau der Emulsionsherstellungsbetriebe in den letzten Jahrzehnten mit der Meinung, ausschließlich sauer reagierende kationische Emulsionen verwenden zu müssen, in der Art gezeigt, daß eine kationisch im alkalischen Medium stabile Emulsion überhaupt nicht in Erwägung gezogen wurde.
Wäre die der Erfindung zugrundeliegende, im alkalischen Medium stabile kationische Emulsion bekannt gewesen, hätte man nicht - wie es heute noch partiell geschieht - Geld in korrosionssichere Apparaturen investiert, und man hätte weiter in den bestehenden Einrichtungen produzieren können.
Das erfindungsgemäße Verfahren und die Vorrichtung zur Herstellung eines einbaufähigen Kaltmischgutes nach der eingangs gegebenen Definition wird durch die in den beigefügten Zeichnungen, Figur 1 bis Figur 5, als beispielhafte Ausbildung, bei besonderer Gewichtung der integrierten Einheit für die Aufbereitung der Bitumenemulsion, näher erläutert.
- Figur 1 zeigt: im Grundriß den Aufbau und die Gliederung der integrierten Einheit zur Herstellung der Bitumenemulsion als Ausschnitt aus der Gesamtanlage, d.h. der Anlage zur Aufbereitung bituminösen Mischgutes.
- Figur 2: bezieht sich auf Figur 1 und zeigt den Aufriß dieser Anlage.
- Figur 3 zeigt: im Grundriß die Gesamtanlage zur Aufbereitung bituminösen Mischgutes einschließlich der integrierten Einheit für die Emulsionsherstellung.
- Figur 4 zeigt: den Aufriß von Figur 3 mit einem unterhalb der Mischer in Beladeposition gebrachten Transportfahrzeug.
- Figur 5 zeigt: eine besonders deutliche Darstellung von einem perspektivischen Aufriß, der, bedingt durch die quasi "Weitwinkelprojektion", die wesentlichen Teile der Gesamtanlage zusammenfassend erkennen läßt.

Die Zweckmäßigkeit einer Zusamenlegung des Standortes der Mischgutherstellung mit dem der Aufbereitung der anionischen Emulsion und deren Abwandlung in eine kationisch-niedrigtemperierten zu vollziehen, wurde im breiten Rahmen durch die Beschreibung des Verfahrens dargelegt.
Sie wird insbesondere dem Bedürfnis gerecht, erwärmtes Wasser zeitgleich mit der kationischen Emulsion für die weitere Aufbereitung zur Verfügung zu haben.

Diese Forderung verlangt eine unverzügliche Wiedergewinnung der überschüssigen Wärme aus dem heiß angelieferten bzw. gelagerten angesäuerten Straßenbitumen.

Das Bitumen wird in der Regel mit einer Temperatur von etwa 170 °C in die Kolloidmühle, gleichzeitig mit dem etwa 50 bis 55%igem alkalisierten und temperierten Wasseranteil der Kolloidmühle aufgegeben, wobei die Anteile gemeinsam in emulgierter Form mit einer Temperatur von ca. 80 °C diese wieder verlassen.

In diesem Zusammenhang ist einzufügen, daß die Aufgabe des Straßenbaubitumens, das mit dem in einer Heißmischgutstation verarbeiteten identisch ist, durch eine gleiche Dosierpumpe erfolgt, wie sie bei der Heißaufbereitung verwendet wird.

Die Wiedergewinnung der Wärme nach Herstellung der anionischen Emulsion geschieht durch Wärmeaustausch mit Kühlwasser, wobei die Temperatur der Emulsion zweckmäßigerweise auf unter 40 °C abgekühlt werden sollte.

Bei einer angenommenen Tagesproduktion einer 50%igen Emulsion von 100 Tonnen, abgekühlt auf 50 °C, mit der Annahme einer Endwassertemperatur von 40 °C, stehen bei 170 °C Bitumentemperatur und bei einer spezifischen Wärme von 0,5 etwa 3 Mio x 4,19 J zur Verfügung.

In der selben Zeit werden für die Wassererwärmung von 50 000 Liter etwa 1,4 Mio x 4,19 J benötigt.

Damit kann auf kostengünstige Weise das Wasser in ausreichender Menge erzeugt werden, so daß mit einer großen Sicherheitsquote gefahren werden kann. Die Anschaffung eines Warmwassergenerators erübrigt sich dadurch.

Bei diesen Voraussetzungen werden drei wichtige Ziele erreicht:
1. Erhalt einer Ausgangsemulsion, wie sie im Verfahrensablauf gebraucht wird, um sie ohne Zwischenlagerung in eine abgekühlte kationische Emulsion zu wandeln und in ununterbrochenem Fluß der Mischstation zuzuführen bzw. auch an einen lediglich emulsionsbeziehenden Kunden abgeben zu können.
2. Erhalt des benötigten Warmwassers in genügender Menge und zeitgleich mit der Aufbereitung der anionischen Emulsion.
3. Möglichkeit einer Parallelherstellung der kationischen Emulsion mit der anionischen Emulsion.

Das zur Herstellung der Ausgangsemulsion notwendige warme Wasser wird aus dem mit Überlauf 6 versehenen Boiler 4 gezogen.
Der Boiler 4 erhält ständigen Zufluß des in den Kühlschlangen 5 aufgewärmten Wassers, und zwar aus den Behältern 1 und 2 über den Zweiwegehahn 76, während das Durchflußwasser aus dem Behälter 3 wegen ungenügender Erwärmung nicht aufgefangen wird.

Während der Produktionspausen wird das Restwasser in dem Boiler entweder mit Hilfe elektrischer Heizglieder oder durch Ölzirkulation, wie sie auch zur Warmhaltung des Bitumens verwendet wird, auf mindestens 30 °C gehalten.
Dieses Wasser wird aus dem Boiler 4 mit Hilfe der Dosierpumpe 7 abgezogen, welche den kleineren, im Boiler selbst untergebrachten Kessel 9 bedient. In diesem sorgt eine Zentrifugalpumpe 22 für eine Mischbewegung für die Einmischung der aus Kessel 18 über die Dosierpumpe 13 dort einzugebenden Alkalien.

Die Dosierpumpe 12 leitet das im Kessel 9 vorbereitete alkalisierte Wasser nach der Kolloidmühle 8, in der auch das über die Dosierpumpe 21 zugeleitete Bitumen 66 ankommt.
Das Wasserniveau im Kessel 9 wird durch eine Elektronik kontrolliert, damit kein Mangel und kein Überlaufen entstehen.
Die anionische Emulsion entsteht beim Durchlauf durch die Kolloidmühle 8 momentan, wobei letztere, durch ihre zusätzliche Eigenschaft als Zentrifugalpumpe, die Emulsion durch die Leitung 15 in das Wärmeaustauschaggregat einpumpt.
Dieses besteht aus drei Behältern 1, 2 und 3, die über die Verbindungen 17 in Serie geschaltet sind. Die Kühlschlangen 5 werden vom Kühlwasser, das entweder aus dem Grundwasser oder aus dem Leitungsnetz stammt, durchflossen, wobei die Wasserführung, für jeden Behälter getrennt, von unten nach oben erfolgt.

Die heiße anionische Mutteremulsion erfährt eine erste Kühlung im Behälter 1 und wird über die Leitung 15 auf den Grund des Behälters 1 geschickt. Die dosierten Proteinstoffe mischen sich mit der vorgekühlten Emulsion im Behälter 2 im Trichter 70 und dem Rohr 71, welches auf den Grund des Behälters 2 führt.
Das Proteinmehl kommt aus dem Silo 27 mit Aufgebergerät 74 und wird mit Hilfe der Transportbänder 67 und 67a in den Trichter 70 und das Rohr 71 eingeführt, wo ein senkrecht stehendes Rührwerk 72 für eine gute Durchmischung sorgt.

Bevor diese Emulsion zu dem in den Behälter 3 einmündenden Überlauf 17 des Behälters 2 aufsteigt, wird ihr durch die Dosierpumpe 73 eine kleine Dosis Sterilisierflüssigkeit - in der Regel eine Formaldehyd-Lösung - zu einem Propeller des Rührwerkes 73, der in einer Erweiterung des nach unten geöffneten Rohres 71 untergebracht ist, injektiert. Die nun bereits kationaktive Emulsion fließt über die Leitung 17 in den Behälter 3, wo sie eine starke regelbare Abkühlung durch Kaltwasser, das wegen ungenügender Aufwärmung nicht mehr für die Emulsionsherstellung gesammelt wird, und der Überlauf frei abfließt, erfährt.

Die maximal abgekühlte kationaktive Emulsion wird über die Leitung bzw. den Überlauf 17 aus dem Behälter 3 in die zweite Kolloidmühle 20 übergeleitet.
Wenn sie in dieser Emulsionsform weiter verarbeitet werden soll, wird sie von der Kolloidmühle 20 mit ihrem Zentrifugalpumpeffekt entweder in den Emulsionskundenkessel eingepumpt oder, gemäß dem Hauptzweck der Anlage, den Mischern der Kaltasphaltstation zugeführt.
Diese Überführungen finden über eine schwenkbare Leitung 31 um den Drehpunkt 30 statt.

Die mit dem Proteinmehl und dem Sterilisator versetzte Ausgangsemulsion ist schon kationaktiv im alkalischen Medium.
Ein etwa erwünschtes zusätzliches Ansäuern erfolgt über die Kolloidmühle 20 durch die Dosierpumpe 23, welche über die Leitung 34 die im Behälter 25 gespeicherte Säurelösung rezeptgerecht in die Kolloidmühle 20 überführt.
Damit kann jeder pH-wert von 1 bis 12 eingestellt werden.

Gleichzeitig bringt die auf der Wasserleitung installierte Dosierpumpe 24 das Verdünnungswasser in die Kolloidmühle 20, welches für pH-Werte unter 7 benötigt wird.
Auf diese Weise kommt das eingangs an der Emulsionsanlage programmierte Heißbitumen mehr oder weniger emulsionsverdünnt rezeptgenau bei der Mischanlage an.

Wenn die nicht angesäuerte, im alkalischen Medium schon kationaktive Emulsion in dieser Form zur Anwendung kommt - was die Regel sein wird - dient die Kolloidmühle 20 lediglich als Pumpe für die Weiterbeförderung der Emulsion. Diese Kolloidmühle 20 tritt dann wieder als Zumischgerät auf, wenn Spezialitäten, wie Latex, Faser- und Farbstoffzusätze oder dergleichen, verlangt werden.

Die so in vielen Arten erhaltene Spezialemulsion mit kationaktiven Eigenschaften tritt dann aus der Kolloidmühle 20 mit erhöhtem Durchfluß aus und bringt aber in jedem Fall das dosierte Bitumen formelgerecht zu dem gleichfalls dosierten Durchgang des Mineralkorngemisches, das auf den Laufbändern zu den Mischern fließt.

Für den Fall, daß eine gewogene Chargenmichung verlangt würde, wäre man, wie beim Heißmischverfahren, dazu gezwungen, den Bitumendurchfluß während der Mischdauer unnötig umzulenken, um ihn als Mischkomponente zu stauen.

Die Emulsionsmischgutherstellung erlaubt mehr Geschmeidigkeit im Ablauf ihrer Aufbereitung und vereinigt auf sich die Vorteile des steten Mischens mit denjenigen des Chargenmischens.
Tatsächlich geben die Dosiersilos 50 nach der verlangten Mischformel die entsprechenden Fraktionen an Körnungen auf die Laufbänder auf.

Die Bitumendosierpunpe 21 gibt eine entsprechend dosierte Menge Bitumen im richtigen Verhältnis dazu und berücksichtigt, nach bekannten Metoden, die momentane Feuchtigkeit der Mineralstoffe.
Es ist dann gleichgültig, welche Menge Wasser und welche anderen Zugaben, ab der Dosierpumpe 21 bis zum Austritt des Bindemittels in den Mischer, "unterwegs" noch dazukommen.

Zu den Mineralstoffen, die in den Mischer fließen, kommt zeitgleich die vorgesehene Bindemittelmenge in Form einer Emulsion.

Die Kolloidmühle ist dabei in ihrer Leistung so viel überdimensioniert, daß sie jede Volumenvergrößerung der ihr aufgegebenen Emulsion im Tempo der Heißbitumendosierung zu fördern imstande ist. Die Vereinigung von Mineralkorn und Bindemittel vollzieht sich demnach in jedem gegebenen Augenblick im korrekten Verhältnis in dem jeweils beschickten Mischer, so daß man im Grunde genommen den Mischer bei jedem Füllgrad entleeren kann, sofern, dies muß allerdings gesagt werden, die Füllung so groß sein muß, daß sich im Mischer die erforderlichen Scherkräfte zwischen den Komponenten entwickeln können.
Der Mischdauer, die man vorsieht, muß die Mischleistung angepaßt werden.

Die Mineralfeststofffraktionen, die aus den Silotaschen des Dosierapparates 50 auf die Transportbänder 52 und 53 aufgegeben werden, werden durch die schwenkbar umschaltbare Sperre 54, je nach Einstellung, in den Mischer 51a und 51b abgeleitet. Das bituminöse Bindemittel wird in Emulsionsform über die Leitung 31 zu dem Gabelverteiler 61 geführt, der in der Weise über den Mischern angebracht ist, daß mittels des elektronisch mit der Sperre 54 gekoppelten Zweiwegehahnes 60 beide Mischkomponenten gleichzeitig und wechselweise in den jeweils gewählten Mischer einlaufen.
Das fallweise herzustellende Emulsionsmischgut kann mit wenig oder viel Wassereinschluß erhalten werden, so daß, ausgehend von der Schlämme bis zu den nur wenig oder gar kein Verdünnungswasser enthaltenden Mischgutqualitäten, welche in getrennter Körnung anfallen, das jeweilige Mischgut entweder entsprechend der Zementbeton- oder der Heißmischgutart* hergestellt wird, wobei im letzteren Fall die Transport- und Verlegegeräte der Heißmischguttechnik verwendbar bleiben.
* (Zementbeton = plastisch;
Heißmischgut = korngetrennt)

Es besteht also für jede einzelne Rezeptur ein Verdünnungsoptimum, insbesondere für das Kaltmischgut, welches anstelle des klassischen Heißmischgutes hergestellt werden soll.
In diesem Fall muß man die zusätzliche Wasserzugabe im Hinblick auf das Verhalten des Mischgutes unter dem Fertiger und unter den Verdichtungsgeräten auf ein Minimum beschränken.

Eine Produktionsunterbrechung, die beispielsweise durch eine verspätete Rückkehr der Transportgeräte entstehen kann, stellt kein besonderes Problem dar, da mit den einlaufenden Transportmitteln die bis dahin abgeschaltete, d.h. stillstehende Anlage, ihren Produktionszyklus wieder, mit dem gleichzeitigen Anlaufen der auf der Übergabe des Bandes 52 zu 53 liegenden Steinmaterialien und dem Zufluß der an der Überlaufgrenze anstehenden Emulsion in den Mischer aufnimmt.

Da im Prinzip das mit der abgewandelten Emulsion aufbereitete Mischgut nicht silierbar ist, erübrigen sich entsprechende Silos, da, ohne große Investitionen, die Produktionsleistung der Mischstation stark erhöht werden kann, was die Wartezeiten der Transportfahrzeuge entsprechend verkürzt.

Letzten Endes sind nach der Emulsionsmischtechnik als entbehrlich zu erklären:
a) die Trockentrommel, und damit ihr Brennstoffverbrauch;
b) die voluminösen kostspieligen und doch nicht immer befreidigenden Entstaubungsgeräte;
c) die Mischgutsilos;
d) der Mischturm mit seinen Silos für die erhitzten Fraktionen der Mischgutstoffe, die Gesteinswaage und die Chargenmischung;
und an deren Stelle folgendes in die Aufbereitungsanlage einzuordnen:
e) eine kompakte Emulsionsanlage mit Anschluß für die Zuführung des Bitumens, das ohne Zwischenlagerung in Emulsionsform dem Mineralstoffgemisch zugeführt wird;
f) ein zweiter Zwangsmischer;
es verbleiben:
g) Mineralstoffdoseure;
h) die Bitumenstockiergefäße;
i) die Transport- und Baustellengeräte.

Einige weitere Funktinsabläufe bleiben noch zu erklären:
In Position 36 sind die Hähne für die vollständige Entleerung der Kühlschlangen vorgesehen (Winter-Stillegung).
Die Wärmeaustauschanlage kann von ihrem Emulsionsinhalt wie folgt entleert werden:
Mit dem Öffnen der Absperrorgane 37 und 40, gemeinsam mit dem Auslauf der proteinstabilisierten Emulsion in die Kolloidmühle 20, die in ihrer Funktion als Zentrifugalpumpe die Emulsion aus den Behältern 2 und 3 in ein kältegeschütztes Aufbewahrungsgefäß überpumpt.
Die Entleerung des Behälters 1, der etwa 1 Tonne anionische Emulsion enthält, erfolgt am besten in 200-Liter-Fässern durch Öffnung des Hahnes 37a. Im Falle einer längeren, z.B. durch Betriebsferien, bedingten Stillsetzung der Anlage muß die in der Wärmeaustauschanlage enthaltene Emulsion, insbesondere diejenige, die den Behälter 1 füllt, etwa alle acht Tage einmal umgepumpt werden, was mit dem Öffnen des Hahnes 37a, im Umlauf durch die Kolloidmühle 8, geschieht.

Das Umpumpen der kationaktiven Emulsion in den Behältern 2 und 3 ist nur selten notwendig; wenn erforderlich, kann dies durch die entsprechende Einstellung des Zweiwegehahnes 10 erfolgen.

Die Elektronik, die, außer der Kontrolle des Wasserstandes in den Behältern 9 und 10, vorgesehen ist, muß im weiteren die exakte Alkalisierung des Emulsionswassers in der Weise steuern, daß bei Schwankungen, die außerhalb der Toleranzgrenzen liegen, die Produktion abgeschaltet wird.

Dies wird durch die Installation eines pH-Messers 65 im unteren Teil des Kessels 9 ermöglicht.
Die Elektronik registriert die Schwankungen und veranlaßt, bei gegebener Notwendigkeit, die Abschaltung.
Dies ist eine absolut notwendige Sicherheitsmaßnahme, um kostspielige Reinigungsarbeiten zu vermeiden.

Ergänzend soll die Elektronik die Versorgung der Alkalizugabe zum Emulsionswasser so steuern, daß, bei vorliegendem Dosierfehler, oder bei zu Ende gehendem Alkalivorrat, abgeschaltet wird.

Die Speisung mit zum Teil wasserlöslichen Proteinstoffen soll durch die Kontrolle des Füllstandsniveaus dieser Stoffe im Silo 27 erfolgen.

So viel zu den vorgesehenen Überwachungen.

Die Möglichkeit der Eingliederung von rotierenden Betontransportmischern ist berücksichtigt.
Diese Geräte haben unwiderlegliche technische Vorteile, die jedoch, a priori, durch die hohen Investitionskosten, welche sie verursachen, nachteilig erscheinen mögen. Man muß aber diese Frage von allen Seiten, inbegriffen die leihweise Benutzung dieser Geräte, betrachten.

Bei Einsatz von Betontransportmischern ist vorgesehen, daß das Laufband 53, welches im Vorwärtsgang die Mischer 51a und 51b beschickt, auf Rückwärtsgang programmiert und die dosierten Mineralstoffe zusammen mit dem in Emulsionsform vorliegenden Bitumen in den Transportmischer überführt werden. Dazu wird der schwenkbare Emulsionsarm in Abgabeposition zu dem Transportbetonmischer gedreht.

Die ausschließliche Verwendung von fahrbaren Betonmischern würde, bei Wegfall der Mischer 51, eine einfachere Bauweise ermöglichen.

Wenn man über die heutigen Möglichkeiten der Mineralstoffversorgung hinausgeht, und die Anlieferung von in ihrer Zusammensetzung bestimmten Mineralstoffgemischen durch Lieferanten voraussetzt, würden sich die erforderlichen Einrichtungen in leicht transportierbare, zusamenhängende Einzelabschnitte trennen lassen.
So kann z.B. eine auf einem Tieflader aufgestellte, integrierte Einrichtung zur Emulsionsherstellung einem Zug von Betontransportern zugeordnet werden. Baustellenzentral aufgestellt, benötigt eine solche Einrichtung nur Wasser und Stromanschluß mit kontraktlich verpflichteten Bitumenlieferanten für angesäuertes Bitumen und einem in gleicher Weise verpflichteten Mineralstofflieferanten.

Für diesen Fall ist im Hinblick auf eine durchlaufende Produktion notwendig, daß ein Betontransportmischer jedes Mal leer ist, wenn der in Stellung stehende Mischer abfahrbereit ist.

Wenn ein Mischfahrzeug gefüllt ist, steuert die Elektronik die Mischkomponenten durch die Betätigung der Schurre 62 und der Zweiwegehähne 60 in den wartenden Mischer.

Mit dieser Art des Vorgehens hat man die Sicherheit eines ununterbrochenen Mischprozesses, und zwar im Gegensatz zu dem was beim Heißmischverfahren gegeben ist.
Hier verursachen die Chargenmischungen Unterbrechungen, die im Durchschnitt bei 45 sec. und mehr je Charge dauern.
Um diese Unterbrechungen teilweise ausgleichen zu können, muß insbesondere mit der Mischzeit pro Charge manipuliert werden. Eine kürzere Mischzeit beeinträchtigt jedoch die Mischgutqualität.

## Patentansprüche

1. Verfahren zur Herstellung eines einbaufähigen Kaltmischgutes auf Basis einer kationisch stabilisierten Bitumenemulsion mit einem Bitumenanteil von etwa 55 % und eines Mineralstoffgemisches abgestufter Körnung,
**dadurch gekennzeichnet,**
daß zunächst in einer ersten Kolloidmühle auf bekannte Weise aus alkalisiertem Wasser und bereits angesäuertem Heißbitumen für den Straßenbau eine anionisch stabilisierte Bitumenemulsion hergestellt wird,
daß die anionisch stabilisierte Bitumenemulsion einem Wärmeaustauscher zugeführt und dort abgekühlt wird,
daß im Wärmeaustauscher der anionisch stabilisierten Bitumenemulsion nach Abkühlung auf unter 50 °C 0,5 - 3 -% quellfähige oder wasserlösliche, pflanzliche Proteinstoffe zugesetzt werden, wobei das als Kühlmittel verwendete, erwärmte Wasser alkalisiert und wieder der ersten Kolloidmühle zugeführt wird,
daß die nun entstandene Bitumenemulsion durch eine zweite Kolloidmühle geführt wird
und daß der Bitumenemulsion zusätzlich nach Zugabe der Proteinstoffe und spätestens vor Austritt aus der zweiten Kolloidmühle neutrale Stoffe, wie Calciumchlorid oder Magnesiumsulfat, saure Stoffe, wie Aluminiumsulfat, Eisensulfat oder dreiwertige Chromsalze, sterilisierend wirkende Stoffe, wie Formaldehyd, bitumenmodifiziernde Stoffe, wie bitumenmodifizierende Latexe oder Faserstoffe, und/oder haftungsfördernde und brechungsverzögernde oder brechungsbeschleunigende Stoffe, wie Zemente oder Kalke, zugesetzt werden.

2. Verfahren nach Anspruch 1,
**dadurch gekennzeichnet,**
daß die anionisch stabilisierte Bitumenemulsion ohne Zwischenlagerung in den Wärmeaustauscher überführt wird.

3. Verfahren nach Anspruch 1,
**dadurch gekennzeichnet,**
daß die anionisch stabilisierte Bitumenemulsion vor der Überführung in den Wärmeaustauscher zwischengelagert wird.

4. Verfahren nach einem der Ansprüche 1 bis 3,
**dadurch gekennzeichnet,**
daß als quellfähige oder wasserlösliche Proteinstoffe Stoffe aus Mehlen pflanzlicher Preßkuchen eingesetzt werden.

5. Vorrichtung zur Durchführung des Verfahrens nach den Ansprüchen 1 bis 4,
**dadurch gekennzeichnet,**
daß die Vorrichtung aus
- einem Dosiersilo (50) für Mineralstoffe, einem Dosiersilo für Bitumen, einem Dosiersilo (27) für Proteinmehl, einem Dosiersilo (18) für anionaktive Substanzen,
- einem Boiler (4) zur Gewinnung von Warmwasser,
- einem Kessel (9) für die Einmischung der anionaktiven Substanzen in das Warmwasser,
- einer ersten Kolloidmühle (8) zur Aufgabe von Bitumen, Warmwasser und anionaktiven Substanzen,
- einem Wärmeaustauscher, bestehend aus in Serie geschalteten Behältern, nämlich einem Behälter (1) mit Kühlschlangen (5) zur Aufnahme und Abkühlung der anionaktiven Bitumenemulsion, einem Behälter (2) mit Kühlschlangen (5) zum Einmischen von Proteinmehl und einem Behälter (3) zum Abkühlen der Emulsion, wobei die Kühlschlangen (5) mit dem Boiler (4) verbunden sind;
- einer zweiten Kolloidmühle (20) zur Abführung der kationischen Emulsion und ggf. Einführung weiterer Zusatzstoffe,
- und einem Mischer (51 a/b) zur Aufgabe der Bitumenemulsion auf die Mineralstoffe besteht.

## Claims

1. Process for the preparation of a cold-miscible material easy to handle and to fit based on a cationically stabilized bitumen emulsion with a bitumen content of about 55% and a mixture of minerals with graded grain sizes, characterized in that an anionically stabilized bitumen emulsion is firstly prepared in a first colloid mill in a known manner from alkalized water and already acidified hot bitumen for road building, in that the anionically stabilized bitumen emulsion is supplied to a heat exchanger and is cooled there, in that 0.5 to 3 % of swellable or water-soluble vegetable proteins are added to the anionically stabilized bitumen emulsion in the heat exchanger after cooling to below 50°C, the heated water used as coolant being alkalized and being returned to the first colloid mill, in that the bitumen emulsion now formed is guided through a second colloid mill and in that neutral substances such as calcium chloride or magnesium sulphate, acidic substances such as aluminium sulphate, iron sulphate or trivalent chromium salts, substances having a sterilizing effect such as formaldehyde, bitumen-modifying substances such as bitumen-modifying latices or fibrous materials and/or adhesion-promoting and breakage-retarding or breakage-accelerating substances such as cements or lime are additionally added to the bitumen emulsion after addition of the proteins and at the latest before delivery from the second colloid mill.

2. Process according to claim 1, characterised in that the anionically stabilized bitumen emulsion is conveyed into the heat exchanger without intermediate storage.

3. Process according to claim 1, characterised in that the anionically stabilized bitumen emulsion is intermediately stored before conveyance into the heat exchanger.

4. Process according to one of claims 1 to 3, characterised in that substances from flours of vegetable cakes are used as swellable or water-soluble proteins.

5. Apparatus for carrying out the process according to claims 1 to 4, characterised in that the apparatus consists of a metering silo (50) for minerals, a metering silo for bitumen, a metering silo (27) for protein flour, a metering silo (18) for anion-active substances, a boiler (4) for obtaining hot water, a kettle (9) for the mixing of the anion-active substances into the hot water, a first colloid mill (8) for the charging of bitumen, hot water and anion-active substances, a heat exchanger consisting of containers connected in series, namely a container (1) with cooling coils (5) for receiving and cooling the anion-active bitumen emulsion, a container (2) with cooling coils (5) for the mixing in of protein flour and a container (3) for cooling the emulsion, the cooling coils (5) being connected to the boiler (4); a second colloid mill (20) for the discharge of the cationic emulsion and optionally introduction of further additives and a mixer (51 a/b) for the charging of the bitumen emulsion onto the minerals.

## Revendications

1. Procédé pour fabriquer un enrobé maniable et posable à froid à base d'une émulsion de bitume stabiliseé et rendue cationique avec une teneur en bitume d'environ 55% et d'un mélange de substances minérales à granulométrie étagée, caractérisé en ce que, dans un premier temps, une émulsion de bitume anionique est fabriquée de manière connue dans un premier moulin colloïdal à partir d'eau alcalinisée et de bitume chaud pour la construction routière déjà acidifié, en ce que cette émulsion de bitume anionique est amenée dans un échangeur thermique où elle est refroidie, en ce que dans l'échangeur thermique, 0,5 à 3% de protéines végétales gonflables ou solubles dans l'eau sont ajoutés à l'émulsion de bitume anionique après avoir ramené sa température en dessous de 50°C, sachant que l'eau ainsi réchauffée utilisée en tant qu'agent de refroidissement est alcalinisée et réalimente le premier moulin colloïdal, en ce que l'émulsion de bitume ainsi obtenue passe à travers un deuxième moulin colloïdal, et en ce qu'en outre, après adjonction des protéines et au plus tard avant la sortie du second moulin colloïdal sont ajoutées à l'émulsion de bitume des substances neutres telles que le chlorure de calcium ou le sulfate de magnésium, des substances acides telles que le sulfate d'aluminium, le sulfate de fer ou des sels de chrome trivalent, des substances à action stérilisante telles que le formaldéhyde, des substances modifiant le bitume telles que des latex modifiant le bitume ou des substances fibreuses, et/ou des substances favorisant l'adhésion et retardant ou accélérant la rupture telles que des ciments ou des chaux.

2. Procédé selon la revendication 1, caractérisé en ce que l'émulsion de bitume anionique stabilisée est amenée dans l'échangeur thermique sans stockage intermédiaire.

3. Procédé selon la revendication 1, caractérisé en ce que l'émulsion anionique stabilisée est stockée temporairement avant d'être amenée dans l'échangeur thermique.

4. Procédé selon l'une des revendications 1 à 3, caractérisé en ce que des substances à base de tourteaux végétaux sont utilisées en tant que protéines gonflables ou solubles dans l'eau.

5. Dispositif pour mettre en oeuvre le procédé selon les revendications 1 à 4, caractérisé en ce que le dispositif se compose :
- d'un silo-doseur (50) pour les substances minérales, d'un silo-doseur pour le bitume, d'un silo-doseur (27) pour la farine protéique, d'un silo-doseur (18) pour les substances nécessaires à la fabrication de l'émulsion anionique,
- d'un boiler (4) pour obtenir de l'eau chaude,
- d'une cuve (9) pour incorporer les substances à activité anionique dans l'eau chaude,
- d'un premier moulin colloïdal (8) pour brasser le bitume, l'eau chaude et les substances actives anioniques,
- d'un échangeur thermique qui se compose de réservoirs montés en série, à savoir d'un réservoir (1) à serpentins de refroidissement (5) destiné à recevoir et à refroidir l'émulsion de bitume anionique, d'un réservoir (2) à serpentins de refroidissement (5) pour incorporer la farine protéique et d'un réservoir (3) pour refroidir l'émulsion, sachant que les serpentins de refroidissement (5) sont reliés au boiler (4);
- d'un second moulin colloïdal (20) pour évacuer l'émulsion cationique et, le cas échéant, pour introduire d'autres adjuvants,
- et d'un mélangeur (51 a/b) pour ajouter l'émulsion bitumineuse aux substances minérales.
